(19) Europäisches Patentamt / European Patent Office / Office européen des brevets

(11) **EP 2 061 199 B1**

(12) **EUROPÄISCHE PATENTSCHRIFT**

(45) Veröffentlichungstag und Bekanntmachung des Hinweises auf die Patenterteilung:
**03.08.2016 Patentblatt 2016/31**

(51) Int Cl.:
*H04L 27/26* *(2006.01)*    *H04L 25/06* *(2006.01)*
*H04L 5/00* *(2006.01)*    *H04L 25/02* *(2006.01)*

(21) Anmeldenummer: **08017906.2**

(22) Anmeldetag: **13.10.2008**

(54) **VERFAHREN UND VORRICHTUNG ZUR ERMITTLUNG EINER GLEICHSPANNUNGS-STÖRUNG IN EINEM OFDM-ÜBERTRAGUNGSSYSTEM**

METHOD AND DEVICE FOR DETERMINING A DC OFFSET IN AN OFDM MULTIPLEXING SYSTEM

PROCÉDÉ ET DISPOSITIF DE DÉTERMINATION D'UN DÉCALAGE EN COURANT CONTINU DANS UN SYSTÈME DE TRANSMISSION MDFO

(84) Benannte Vertragsstaaten:
**DE FR GB**

(30) Priorität: **14.11.2007 DE 102007054356**
          **20.05.2008 DE 102008024303**
          **16.07.2008 DE 102008033437**

(43) Veröffentlichungstag der Anmeldung:
**20.05.2009 Patentblatt 2009/21**

(73) Patentinhaber: **Rohde & Schwarz GmbH & Co. KG**
**81671 München (DE)**

(72) Erfinder: **Kuhn, Christian**
**80689 München (DE)**

(74) Vertreter: **Körfer, Thomas et al**
**Mitscherlich PartmbB**
**Patent- und Rechtsanwälte**
**Sonnenstrasse 33**
**80331 München (DE)**

(56) Entgegenhaltungen:
- **HEEJUNG YU ET AL: "Design of Dual-Band MIMO-OFDM System for Next Generation Wireless LAN", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, Bd. 4, 16. Mai 2005 (2005-05-16), Seiten 2640-2644, XP010825665, DOI: 10.1109/ICC.2005.1494828 ISBN: 978-0-7803-8938-0**
- **CHANGHO SUH ET AL: "Preamble Design for Channel Estimation in MIMO-OFDM Systems", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, Bd. 1, 1. Dezember 2003 (2003-12-01), Seiten 317-321, XP010677895, DOI: 10.1109/GLOCOM.2003.1258253 ISBN: 978-0-7803-7974-9**
- **GIL G-T ET AL: "Joint ML Estimation of Carrier Frequency, Channel, I/Q Mismatch, and DC Offset in Communication Receivers", IEEE TRANSACTIONS ON VEHICULAR TECHNOLOGY, IEEE SERVICE CENTER, PISCATAWAY, NJ, US, Bd. 54, Nr. 1, 1. Januar 2005 (2005-01-01) , Seiten 338-349, XP011125781, ISSN: 0018-9545, DOI: 10.1109/TVT.2004.836919**

EP 2 061 199 B1

**Beschreibung**

Die Erfindung betrifft ein Verfahren und eine Vorrichtung zur Ermittlung einer senderseitig verursachten Gleichspannungs-Störung in einem OFDM-Übertragungssystem.

Für zukünftige komplexe Applikationen im Mobilfunkbereich - beispielsweise digitales Fernsehen auf Mobilfunkgeräte - werden höhere Datenraten bei gleichzeitig geringer bis mittlerer Mobilität der Mobilfunk-Endgeräte benötigt. Um das erhöhte Datenaufkommen bewältigen zu können, werden zukünftig verstärkt Mehrantennen-Systeme - sogenannte Multiple-Input-Multiple-Output-(MIMO-)Systeme - gekoppelt mit Vielfachzugriffsverfahren basierend auf dem orthogonalen Frequenzmultiplex (Orthogonal-Frequency-Division-Multiple-Access (OFDM)) zum Einsatz kommen. Derartige MIMO-OFDM-Übertragungssysteme sind beispielsweise im WLAN-Standard IEEE802.11n oder im WiMAX-Standard IEEE802.16e standardisiert.

Die Mobilfunkgeräte weisen system- wie auch herstellungsbedingt gewisse Ungenauigkeiten auf, die zu einer zusätzlichen Störung im zu übertragenden OFDM-Nutzsignal führen. Derartige Störsignalanteile im OFDM-Nutzsignal können ohne ihre genaue Kenntnis in Detektoren von Mobilfunkempfängern üblicherweise nicht identifiziert und separiert werden und beeinträchtigen somit die Entzerrung des empfangenen OFDM-Signals im Empfänger.

Für eine hochwertige Übertragungsqualität sind folglich derartige Störeffekte offline bei der Inbetriebnahme wie auch online im laufenden Betrieb des MIMO-OFDM-Übertragungssystems mithilfe eines geeigneten Mobilfunkmessverfahrens und eines dazugehörigen bedienerfreundlichen und schnellen Mobilfunkmesssystems so genau wie möglich zu schätzen, um diese Störsignalanteile im empfangenen OFDM-Übertragungssignal weitestgehend im Mobilfunkempfänger zu kompensieren.

Im Folgenden wird als Störeffekt eine senderseitige Gleichanteilsstörung - auch I/Q-Offset, DC-Offset oder LO-Leakage bezeichnet - betrachtet, wie sie beispielsweise als Offsetfehler in Analog-Digital-Wandlern oder in Endstufenverstärkern von Sendestationen auftreten.

In der DE 103 03 475 B3 ist ein auf dem Maximum-Likelihood-Ansatz basierendes Schätzverfahren zur Schätzung eines DC-Offsets in einem Basisbandsignal in Kombination mit einer Schätzung des Single-Input-Single-Output (SISO) -Übertragungskanals in einem Funkempfänger offenbart. Bei der Gleichanteilsstörung handelt es sich um eine Störung, die erst im Empfänger eines im Zeitmultiplex-Vielfachzugriff (Time-Division-Multiple-Access (TDMA)) betriebenen und GMSK-(Gaussian-Minimum-Shift-Keying-) bzw. 8-PSK-(8-Phase-Shift-Keying-) modulierten Übertragungssystem entstanden ist.

Das Dokument Heejung Yu et al.: "Design of Dual-Band MIMO-OFDM System for Next Generation Wireless LAN", IEEE International Conference on Communications, 2005, Seoul, Korea, 16. bis.20 Mai 2005, Piscataway, NJ, USA, IEEE, Band 3, Seiten 2640 - 2644, offenbart ein Verfahren zur Bestimmung von Sendesymbolen x in einem MIMO-OFDM-Übertragungssystem mittels Maximum-Likelihood-Schätzverfahren durch Gewichtung der OFDM-Empfangssymbole mit der Pseudoinversen W der Kanalübertragungsmatrix H (siehe hierzu die Gleichungen (4) und (5) und die entsprechende Beschreibung in der linken Spalte auf Seite 2643).

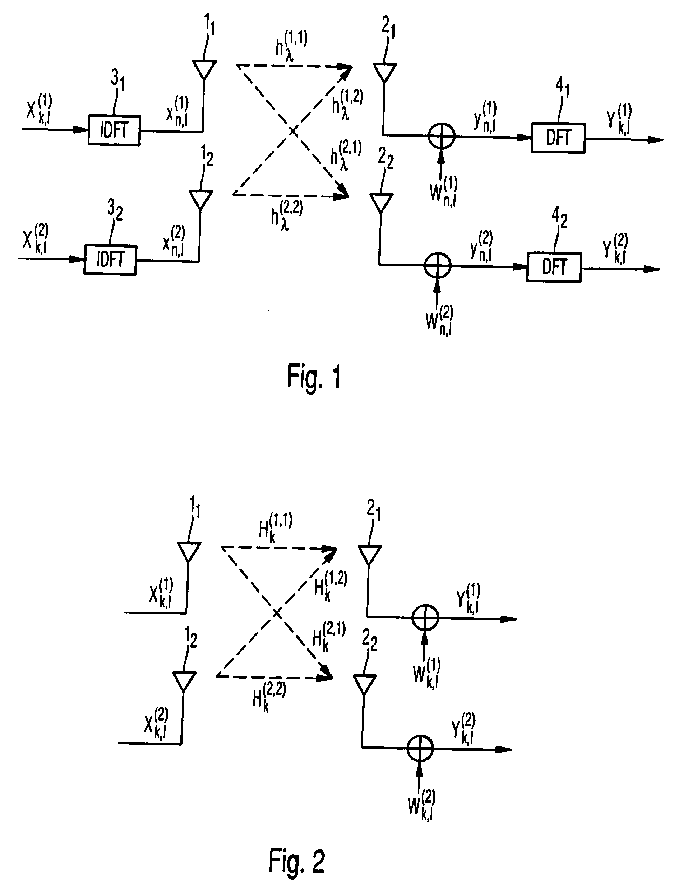

Die Schätzung der Gleichanteilsstörung erfolgt hierbei aufgrund des TDMA-Zugriffs, bei dem die zu den einzelnen Nutzern jeweils gehörigen Datensymbole in einzelnen zeitlich aufeinander folgenden Datenbursts angeordnet sind, über mehrere zeitlich aufeinander folgend empfangene Datenbursts $y = [y(L) .. y(N\text{-}1)]^T$, was bei einer OFDM-Übertragung, bei der die von den sendenden und empfangenden Nutzern verwendeten OFDM-Symbole gemäß Fig. 1 im Frequenzbereich vorliegen, nicht zielführend ist.

Aufgabe der Erfindung ist es deshalb, ein Verfahren und eine Vorrichtung zur Schätzung einer in jedem einzelnen Sender verursachten Gleichanteilsstörung für den Fall einer OFDM-Übertragung in einem SISO- und einem MIMO-Übertragungssystem zu realisieren.

Die Erfindung wird durch ein erfindungsgemäßes Verfahren zur Ermittlung einer senderseitig verursachten

Gleichspannungs-Störung in einem OFDM-Übertragungssystem mit den Merkmalen des Patentanspruchs 1 und durch die erfindungsgemäße Vorrichtung zur Ermittlung einer senderseitig verursachten Gleichspannungs-Störung in einem OFDM-Übertragungssystem mit den Merkmalen des Patentanspruchs 9 gelöst.

Erfindungsgemäß wird eine Maximum-Likelihood-Schätzung der senderseitig verursachten Gleichanteilsstörung im Frequenzbereich bzw. Spektralbereich durchgeführt, so dass eine Schätzung von Gleichanteilsstörungen in einem OFDM-Übertragungssystem möglich ist. Die Schätzung erfolgt erfindungsgemäß durch Gewichten der frequenztransformierten, in jeder Senderantenne jeweils empfangenen OFDM-Empfangssymbole mit den korrespondierenden Matrixelementen der Pseudoinversen einer Kanalübertragungsmatrix, die Kanalübertragungsfaktoren der einzelnen Übertragungskanäle zwischen jeder Sendeantenne und jeder Empfangsantenne beinhaltet.

Das erfindungsgemäße Maximum-Likelihood-Schätzverfahren und der erfindungsgemäße Maximum-Likelihood-Schätzvorrichtung eignet sich insbesondere für Mehrantennensysteme - MIMO - und kann in einem mobilen MIMO-OFDM-Übertragungssystem mit hoher Datenrate und geringer bis mittlerer Mobilität der mobilen Endgräte eingesetzt werden.

Systemtheoretisch bedingt tritt die senderseitig verursachte Gleichanteilsstörung im 0-ten Unterträger des OFDM-Übertragungssystems - auch Gleichspannungs-Unterträger oder DC-Unterträger genannt - auf, so dass OFDM-Nutzdaten einzig in den übrigen Unterträgern - d.h. im 1-ten bis $N$-1-ten Unterträger - gesendet werden.

Um ein sicheres Schätzergebnis für die üblicherweise mit Kanalrauschen überlagerten senderseitigen Gleichanteilstörungen zu erzielen, wird die Maximum-Likelihood-Schätzung um eine Mittelung über eine bestimmte Anzahl L von im DC-Unterträger empfangenen OFDM-Empfangssymbolen erweitert.

Da eine Gleichanteilsstörung eine Pegelgröße darstellt, die üblicherweise zu einem Bezugspegel relativiert wird und in dB angezeigt wird, werden die ermittelten Schätzwerte mit einer Bezugsgröße normiert, die sich aus der Wurzel der mittleren Betragsquadrate sämtlicher in den einzelnen Unterträgern 1 bis $N$-1 über die gesamte Mittelungslänge L von der jeweiligen Sendeantenne gesendeten OFDM-Sendesymbole ergibt.

Im Folgenden wird das erfindungsgemäße Verfahren und die erfindungsgemäße Vorrichtung zur Ermittlung einer senderseitig verursachten Gleichspannungs-Störung in einem OFDM-Übertragungssystem anhand der Zeichnung im Detail erläutert. Die Figuren der Zeichnung zeigen:

Fig. 1     ein Blockschaltbild eines MIMO-OFDM-Übertragungssystem mit zwei Sende- und zwei Empfangsantennen,

Fig. 2     ein Blockschaltbild eines MIMO-OFDM-Übertragungssystem mit zwei Sende- und zwei Empfangsantennen im Spektralbereich,

Fig. 3     ein Blockdiagramm eines MIMO-OFDM-Übertragungssystem mit zwei Sende- und zwei Empfangsantennen und senderseitigen Gleichanteilsstörungen,

Fig. 4     ein Flussdiagramm des erfindungsgemäßen Verfahrens zur Ermittlung einer senderseitig verursachten Gleichspannungs-Störung in einem OFDM-Übertragungssystem und

Fig. 5     ein Blockdiagramm der erfindungsgemäßen Vorrichtung zur Ermittlung einer senderseitig verursachten Gleichspannungs-Störung in einem OFDM-Übertragungssystem.

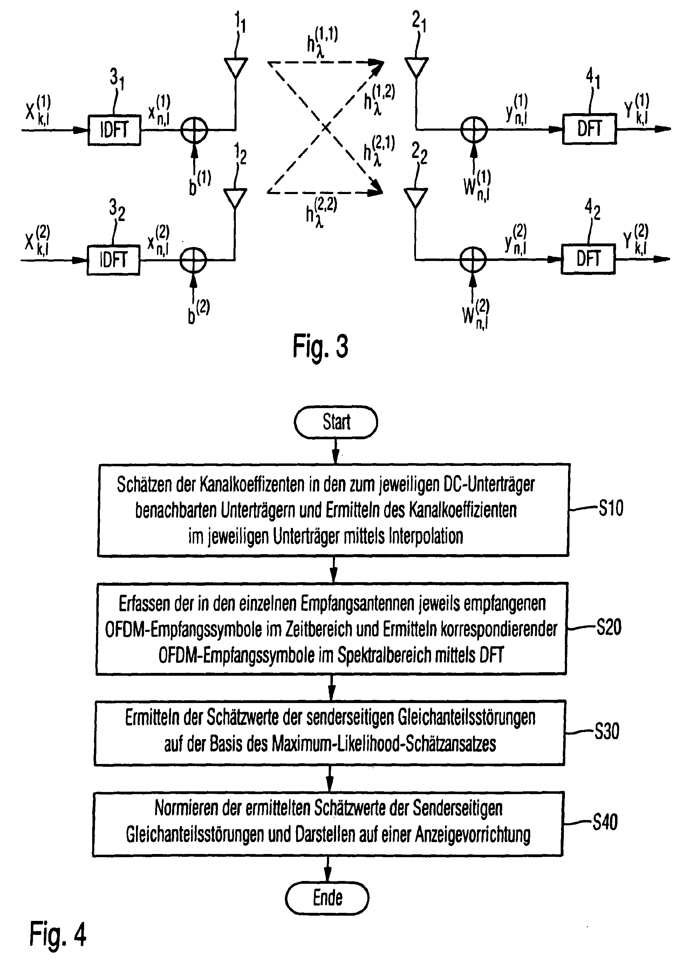

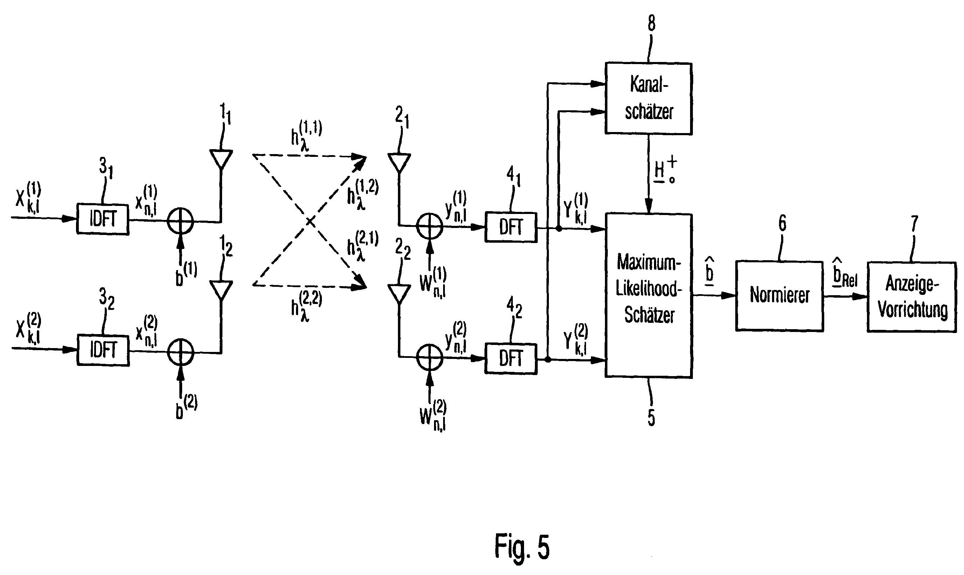

Bevor anhand der Fig. 4 und 5 der Zeichnung das erfindungsgemäße Verfahren und die erfindungsgemäße Vorrichtung zur Ermittlung einer senderseitig verursachten Gleichspannungs-Störung in einem OFDM-Übertragungssystem vorgestellt wird, werden im Folgenden die für das Verständnis der Erfindung erforderlichen mathematischen Grundlagen hergeleitet:

Gemäß Fig. 1, in der ein MIMO-OFDM-Übertragungssystem mit zwei Sendeantennen $1_1$ und $1_2$ und zwei Emp-fangsantennen $2_1$ und $2_2$ dargestellt ist, wird pro Sendeantenne $\nu$=1,2 jeweils ein moduliertes OFDM-Sendesymbol $X^{(\nu)}_{k,l}$ im Frequenzbereich mittels des jeweiligen inversen diskreten Fourier-Transformators (IDFT) $3_1$ und $3_2$ in ein korrespondierendes OFDM-Sendesymbol $x^{(\nu)}_{n,l}$ im Zeitbereich entsprechend Gleichung (1) transformiert.

$$x^{(\nu)}_{n,l} = \sum_{k=0}^{N-1} X^{(\nu)}_{k,l} \cdot e^{jnk\frac{2\pi}{N}} \tag{1}$$

Hierbei stellt der *Index k* des OFDM-Sendesymbols $X^{(\nu)}_{k,l}$ im Frequenzbereich den Index des Unterträgers, in dem das von der Sendeantenne $\nu$ gesendete OFDM-Sendesymbols $X^{(\nu)}_{k,l}$ im Frequenzbereich übertragen wird, und der Index n des OFDM-Sendesymbols $x^{(\nu)}_{n,l}$ im Zeitbereich den dazu korrespondierenden, in den Zeitbereich transformierten Index dar, in dem das von der Sendeantenne $\nu$ gesendete OFDM-Sendesymbol $x^{(\nu)}_{n,l}$ im Zeitbereich übertragen wird, während mit dem Index *I* der Durchführungszeitpunkt der diskreten Fourier-Transformation bzw. der inversen diskreten Fourier-Transformation bezeichnet wird.

Nach der Erzeugung des OFDM-Sendesymbols $x^{(\nu)}_{n,l}$ im Zeitbereich in der Sendeantenne $\nu$ erfolgt die Über-tragung über den Übertragungskanal mit der Kanalimpulsantwort $h_\lambda^{(\mu,\nu)}$ zur Empfangsantenne $\mu$. Der Index $\lambda$ kenn-zeichnet hierbei den einzelnen Koeffizienten der Kanalimpulsantwort $h_\lambda^{(\mu,\nu)}$ zwischen Sendeantenne $\nu$ und Empfangs-antenne $\mu$. Beim jeweiligen Übertragungskanal wird Frequenzselektivität und Zeitinvarianz angenommen.

Die Übertragung des von Sendeantenne $\nu$ gesendeten OFDM-Sendesymbols $x^{(\nu)}_{n,l}$ über den Übertragungs-kanal zwischen Sendeantenne $\nu$ und Empfangsantenne $\mu$ ergibt sich aus der Faltung $\sum_\lambda h_\lambda^{(\mu,\nu)} \cdot x^{(\nu)}_{n-\lambda,l}$ des von Sendeantenne $\nu$ gesendeten OFDM-Sendesymbols $x^{(\nu)}_{n,l}$ mit der Kanalimpulsantwort $h_\lambda^{(\mu,\nu)}$ des Übertragungskanals zwischen Sendeantenne $\nu$ und Empfangsantenne $\mu$ zuzüglich einer in der Empfangsantenne $\mu$ verursachten additiven

Rauschstörung $w^{(\mu)}{}_{n,l}$.

Das von der Empfangsantenne $\mu$ empfangene OFDM-Empfangssymbol $y^{(\mu)}{}_{n,l}$ im Zeitbereich ergibt sich aus der Überlagerung sämtlicher über die einzelnen Übertragungskanäle jeweils übertragenen und von den einzelnen Sendeantennen $\nu$ jeweils gesendeten OFDM-Sendesymbole $x^{(\nu)}{}_{n,l}$ im Zeitbereich. Für das in Fig. 1 dargestellte MIMO-OFDM-Übertragungssystem mit 2 Sendeantennen und 2 Empfangsantennen ergeben sich demnach die mathematischen Beziehungen für die in den Empfangsantennen $2_1$ und $2_2$ empfangenen OFDM-Empfangssymbole $y^{(1)}{}_{n,l}$ und $y^{(2)}{}_{n,l}$ im Zeitbereich gemäß Gleichung (2A) und (2B).

$$y^{(1)}{}_{n,l} = \sum_{\lambda} h_{\lambda}{}^{(1,1)} \cdot x_{n-\lambda,l}{}^{(1)} + \sum_{\lambda} h_{\lambda}{}^{(1,2)} \cdot x_{n-\lambda,l}{}^{(2)} + w^{(1)}{}_{n,l} \qquad (2A)$$

$$y^{(2)}{}_{n,l} = \sum_{\lambda} h_{\lambda}{}^{(2,1)} \cdot x_{n-\lambda,l}{}^{(1)} + \sum_{\lambda} h_{\lambda}{}^{(2,2)} \cdot x_{n-\lambda,l}{}^{(2)} + w^{(2)}{}_{n,l} \qquad (2B)$$

In an die Empfangsantennen $2_1$ und $2_2$ jeweils anschließenden diskreten Fourier-Transformatoren $4_1$ und $4_2$ werden aus den von der jeweiligen Empfangsantenne $\mu=1,2$ empfangenen OFDM-Empfangssymbol $y^{(\mu)}{}_{n,l}$ im Zeitbereich mittels diskreter Fouriertransformation (DFT) von der jeweiligen Empfangsantenne $\mu$ empfangene OFDM-Empfangssymbole $Y^{(\mu)}{}_{k,l}$ im Frequenzbereich gemäß Gleichung (3) berechnet.

$$Y^{(\mu)}{}_{k,l} = \frac{1}{N} \sum_{n=0}^{N-1} y^{(\mu)}{}_{n,l} \cdot e^{-jnk\frac{2\pi}{N}} \qquad (3)$$

Für das in Fig. 2 dargestellte MIMO-OFDM-Übertragungssystem mit 2 Sendeantennen und 2 Empfangsantennen im Frequenzbereich ergeben sich demnach die mathematischen Beziehungen für die in den Empfangsantennen $2_1$ und $2_2$ empfangenen OFDM-Empfangssymbole $Y^{(1)}{}_{k,l}$ und $Y^{(2)}{}_{k,l}$ im Frequenzbereich gemäß Gleichung (4A) und (4B).

$$Y^{(1)}{}_{k,l} = H_k{}^{(1,1)} \cdot X_{k,l}{}^{(1)} + H_k{}^{(1,2)} \cdot X_{k,l}{}^{(2)} + W^{(1)}{}_{k,l} \qquad (4A)$$

$$Y^{(2)}{}_{k,l} = H_k{}^{(2,1)} \cdot X_{k,l}{}^{(1)} + H_k{}^{(2,2)} \cdot X_{k,l}{}^{(2)} + W^{(2)}{}_{k,l} \qquad (4B)$$

Bei dem zum Unterträger $k$ gehörigen Teilkanal handelt es sich wie im Fall eines SISO-OFDM-Übertragungssystems um einen frequenzflachen Teilkanal, d.h. um einen nichtfrequenzselektiven Teilkanal mit einem im gesamten Frequenzband des Teilkanals konstanten Übertragungskanalfaktor $H_k{}^{(\mu,\nu)}$.

Treten senderseitig Gleichanteilstörungen $\underline{b}=[b^{(1)} .. b^{(\nu)} .. b^{(U)}]$ auf, die additive, komplexwertige und zeitinvariante Störungen darstellen, so geht das Blockschaltbild für ein MIMO-OFDM-Übertragungssystem mit zwei Sendeantennen $1_1$ und $1_2$ und zwei Empfangsantennen $2_1$ und $2_2$ in Fig. 1 in das korrespondierende, mit senderseitigen Gleichanteilsstörungen versehene Blockschaltbild in Fig. 3 über.

Die korrespondierenden mathematischen Beziehungen für die in den Empfangsantennen $2_1$ und $2_2$ empfangenen OFDM-Empfangssymbole $y^{(1)}{}_{n,l}$ und $y^{(2)}{}_{n,l}$ im Zeitbereich ergeben sich ausgehend von Gleichung (2A) und (2B) gemäß Gleichung (5A) und (5B).

$$y^{(1)}{}_{n,l} = \sum_{\lambda} h_{\lambda}{}^{(1,1)} \cdot (x_{n-\lambda,l}{}^{(1)} + b^{(1)}) + \sum_{\lambda} h_{\lambda}{}^{(1,2)} \cdot (x_{n-\lambda,l}{}^{(2)} + b^{(2)}) + w^{(1)}{}_{n,l} \qquad (5A)$$

$$y^{(2)}{}_{n,l} = \sum_{\lambda} h_{\lambda}{}^{(2,1)} \cdot (x_{n-\lambda,l}{}^{(1)} + b^{(1)}) + \sum_{\lambda} h_{\lambda}{}^{(2,2)} \cdot (x_{n-\lambda,l}{}^{(2)} + b^{(2)}) + w^{(2)}{}_{n,l} \qquad (5B)$$

Die senderseitigen Gleichanteilsstörungen $\underline{b}=[b^{(1)} .. b^{(\nu)} .. b^{(U)}]$ im Zeitbereich gehen infolge der diskreten Fourier-Transformation einzig in den DC-Unterträger. Die mathematischen Beziehungen für die in den Empfangsantennen $2_1$ und $2_2$ empfangenen OFDM-Empfangssymbole $Y^{(1)}_{k,l}$ und $Y^{(2)}_{k,l}$ im Frequenzbereich bei Vorliegen von senderseitigen Gleichanteilsstörungen $\underline{b}=[b^{(1)} \,.. \, b^{(v)} \,.. \, b^{(U)}]$ ergeben sich somit ausgehend von Gleichung (5A) und (5B) gemäß Gleichung (6A) und (6B).

$$Y^{(1)}_{k,l} = \begin{cases} H_k^{(1,1)} \cdot (X_{k,l}^{(1)} + N \cdot b^{(1)}) + H_k^{(1,2)} \cdot (X_{k,l}^{(2)} + N \cdot b^{(2)}) + W^{(1)}_{k,l} \\ H_k^{(1,1)} \cdot X_{k,l}^{(1)} + H_k^{(1,2)} \cdot X_{k,l}^{(2)} + W^{(1)}_{k,l} \end{cases}$$

$$\text{für} \quad \begin{matrix} k = 0 \\ k \neq 0 \end{matrix} \qquad\qquad (6A)$$

$$Y^{(2)}_{k,l} = \begin{cases} H_k^{(2,1)} \cdot (X_{k,l}^{(1)} + N \cdot b^{(1)}) + H_k^{(2,2)} \cdot (X_{k,l}^{(2)} + N \cdot b^{(2)}) + W^{(2)}_{k,l} \\ H_k^{(2,1)} \cdot X_{k,l}^{(1)} + H_k^{(2,2)} \cdot X_{k,l}^{(2)} + W^{(2)}_{k,l} \end{cases}$$

$$\text{für} \quad \begin{matrix} k = 0 \\ k \neq 0 \end{matrix} \qquad\qquad (6B)$$

Da die senderseitige Gleichanteilsstörung $\underline{b}=[b^{(1)} \,.. \, b^{(v)} \,.. \, b^{(U)}]$ nur im Unterträger mit dem Index $k=0$ auftritt, werden auf diesem Unterträger meist keine OFDM-Sendesymbole $X^{(v)}_{0,l}$ übertragen. Die Gleichungen (6a) und (6b) gehen folglich nach Gleichung (7A) und (7B) über.

$$Y^{(1)}_{k,l} = \begin{cases} H_k^{(1,1)} \cdot N \cdot b^{(1)} + H_k^{(1,2)} \cdot N \cdot b^{(2)} + W^{(1)}_{k,l} \\ H_k^{(1,1)} \cdot X_{k,l}^{(1)} + H_k^{(1,2)} \cdot X_{k,l}^{(2)} + W^{(1)}_{k,l} \end{cases} \quad \text{für} \quad \begin{matrix} k = 0 \\ k \neq 0 \end{matrix}$$

$$(7A)$$

$$Y^{(2)}_{k,l} = \begin{cases} H_k^{(2,1)} \cdot N \cdot b^{(1)} + H_k^{(2,2)} \cdot N \cdot b^{(2)} + W^{(2)}_{k,l} \\ H_k^{(2,1)} \cdot X_{k,l}^{(1)} + H_k^{(2,2)} \cdot X_{k,l}^{(2)} + W^{(2)}_{k,l} \end{cases} \quad \text{für} \quad \begin{matrix} k = 0 \\ k \neq 0 \end{matrix}$$

$$(7B)$$

Zur Schätzung von in insgesamt U Sendern jeweils verursachten Gleichanteilsstörungen $\underline{b}=[b^{(1)} \,.. \, b^{(v)} \,.. \, b^{(U)}]$ in jedem der insgesamt $V$ Empfänger $\mu$, $1 \leq \mu \leq V$, kann folglich die mathematische Beziehung zur Schätzung von in 2 Sendern verursachten Gleichanteilsstörungen $b^{(1)}$ und $b^{(2)}$ in jeder der beiden Empfänger - Untergleichung für den Fall $k=0$ der Gleichung (7A) und (7B) - herangezogen werden und gemäß Gleichung (8) erweitert werden.

$$Y^{(\mu)}_{0,l} = \sum_{v=1}^{U} (H_0^{(\mu,v)} \cdot N \cdot b^{(v)} + W^{(\mu)}_{0,l}) \qquad\qquad (8)$$

Der Übertragungskanalfaktor $H_0^{(\mu,v)}$ im DC-Unterträger des Übertragungskanals zwischen der $v$-ten Sendeantenne und der $\mu$-ten Empfangsantenne kann aufgrund fehlender Datensymbolübertragung - $X^{(v)}_{0,l}=0$ - nicht direkt geschätzt werden, sondern wird durch Interpolation, beispielsweise durch Wiener-Interpolation, aus den in den jeweils benachbarten Unterträgern geschätzten Übertragungskanalfaktoren ermittelt.

Bei Anwendung des Maximum-Likelihood-Ansatzes ergibt sich unter der Voraussetzung von unkorrelierten Rauschprozessen bezüglich der Empfangsantennen $\mu$ ausgehend von Gleichung (8) die zu minimierende Maximum-Likelihood-Kostenfunktion $L(b^{(1)},..,b^{(U)})$ gemäß Gleichung (9).

$$L(b^{(1)},..,b^{(U)}) = \sum_{l=1}^{L}\sum_{\mu=1}^{V}\left| Y^{(\mu)}{}_{0,l} - N\cdot\sum_{\nu=1}^{U}H^{(\mu,\nu)}{}_0\cdot b^{(\nu)}\right|^2 \qquad (9)$$

Die Maximum-Likelihood-Schätzung erfolgt hierbei durch Mittelung über insgesamt $L$ OFDM-Empfangssymbole $Y^{(\mu)}{}_{0,l}$ im Frequenzbereich je Empfangsantenne $\mu$ und jeweiligem DC-Unterträger.

Zur Schätzung der insgesamt $U$ Gleichanteilsstörungen $\underline{b}=[b^{(1)} .. b^{(\nu)} .. b^{(U)}]$ ist die Maximum-Likelihood-Kostenfunktion $L(b^{(1)},..,b^{(U)})$ hinsichtlich aller $U$ Gleichanteilsstörungen $\underline{b}=[b^{(1)} .. b^{(\nu)} .. b^{(U)}]$ zu minimieren, indem die Maximum-Likelihood-Kostenfunktion $L(b^{(1)},..,b^{(U)})$ nach der jeweiligen Gleichanteilsstörung $b^{(\rho)}$ gemäß Gleichung (10) differenziert und anschließend zu Null gesetzt wird.

$$\frac{\partial}{\partial b^{(\rho)}}L(b^{(1)},..,b^{(U)}) = 2\sum_{l=1}^{L}\sum_{\mu=1}^{V}\left( Y^{(\mu)}{}_{0,l} - N\cdot\sum_{\nu=1}^{U}H^{(\mu,\nu)}{}_0\cdot b^{(\nu)}\right)\cdot(H^{(\mu,\rho)}{}_0)^* = 0 \quad (10)$$

Gleichung (10) lässt sich nach Gleichung (11) mathematisch umformen.

$$\sum_{l=1}^{L}\sum_{\mu=1}^{V}Y^{(\mu)}{}_{0,l}\cdot(H^{(\mu,\rho)}{}_0)^* = N\cdot\sum_{l=1}^{L}\sum_{\mu=1}^{V}(H^{(\mu,\rho)}{}_0)^*\cdot\sum_{\nu=1}^{U}H^{(\mu,\nu)}{}_0\cdot\hat{b}^{(\nu)} \qquad (11)$$

Da der mathematische Term der rechten Seite von Gleichung (11) nicht vom Index $l$ abhängt, kann die Summe über den Index $l$ durch Multiplikation des Restterms der rechten Seite von Gleichung (11) mit dem Faktor L gemäß Gleichung (12) aufgelöst werden.

$$\sum_{l=1}^{L}\sum_{\mu=1}^{V}Y^{(\mu)}{}_{0,l}\cdot(H^{(\mu,\rho)}{}_0)^* = N\cdot L\cdot\sum_{\mu=1}^{V}(H^{(\mu,\rho)}{}_0)^*\cdot\sum_{\nu=1}^{U}H^{(\mu,\nu)}{}_0\cdot\hat{b}^{(\nu)} \qquad (12)$$

Die linke Seite der Gleichung (12) kann äquivalent für jede Sendeantenne $v$, $1\leq\nu\leq U$, ermittelt werden und in einen Vektor gemäß Gleichung (13) eingefügt werden. Gleichung (13) kann als Matrizen-Multiplikation des mit 1-Werten besetzten Vektors $\underline{1}$ mit der Empfangssymbolmatrix $\underline{Y}_0$ und mit der Kanalübertragungsmatrix $\underline{H}_0$ im DC-Unterträger interpretiert werden.

$$\begin{pmatrix} \vdots \\ \sum_{l=1}^{L}\sum_{\mu=1}^{V}Y^{(\mu)}{}_{0,l}\cdot(H^{(\mu,\rho)}{}_0)^* \\ \vdots \end{pmatrix} = \begin{pmatrix} H_0^{(1,1)} & .. & H_0^{(1,U)} \\ \vdots & & \vdots \\ H_0^{(V,1)} & .. & H_0^{(V,U)} \end{pmatrix}^H \cdot \begin{pmatrix} Y_{0,1}^{(1)} & .. & Y_{0,L}^{(1)} \\ \vdots & & \vdots \\ Y_{0,1}^{(V)} & .. & Y_{0,L}^{(V)} \end{pmatrix}\cdot\begin{pmatrix} 1 \\ \vdots \\ 1 \end{pmatrix} =$$

$$= \underline{H}_0^H\cdot\underline{Y}_0\cdot\underline{1} \qquad (13)$$

Die rechte Seite der Gleichung (12) kann äquivalent für jede Sendeantennen $v$, $1\leq\nu\leq U$, ermittelt werden und in einen Vektor gemäß Gleichung (14) eingefügt werden. Gleichung (14) kann als Matrizen-Multiplikation des mit den Schätzwerten der Gleichanteilsstörungen besetzten Vektors $\hat{\underline{b}}$ mit der Kanalübertragungsmatrix $\underline{H}_0$ im DC-Unterträger und mit der zugehörigen hermitschen Kanalübertragungsmatrix $\underline{H}_0^H$ interpretiert werden.

$$\left( \begin{array}{c} \vdots \\ \sum_{\mu=1}^{V} (H^{(\mu,\rho)}{}_0)^* \cdot \sum_{\nu=1}^{U} H^{(\mu,\nu)}{}_0 \cdot \hat{b}^{(\nu)} \\ \vdots \end{array} \right) = \left( \begin{array}{ccc} H_0{}^{(1,1)} & .. & H_0{}^{(1,U)} \\ \vdots & & \vdots \\ H_0{}^{(V,1)} & .. & H_0{}^{(V,U)} \end{array} \right)^H \cdot \left( \begin{array}{ccc} H_0{}^{(1,1)} & .. & H_0{}^{(1,U)} \\ \vdots & & \vdots \\ H_0{}^{(V,1)} & .. & H_0{}^{(V,U)} \end{array} \right) \cdot \left( \begin{array}{c} \hat{b}^{(1)} \\ \vdots \\ \hat{b}^{(U)} \end{array} \right) =$$

$$= \underline{H}_0{}^H \cdot \underline{H}_0 \cdot \hat{\underline{b}} \tag{14}$$

Kombiniert man die in Gleichung (13) und (14) ermittelten Terme für die rechte und linke Seite von Gleichung (12), so erhält man die mathematische Beziehung in Gleichung (15), die nach mathematischer Umformung zum Schätzwert $\hat{\underline{b}}=[\hat{b}^{(1)} .. \hat{b}^{(\nu)} .. \hat{b}^{(U)}]$ für die senderseitige Gleichanteilsstörung $\underline{b}=[b^{(1)} .. b^{(\nu)} .. b^{(U)}]$ gemäß Gleichung (16) führt.

$$\underline{H}_0{}^H \cdot \underline{Y}_0 \cdot \underline{1} = N \cdot L \cdot \underline{H}_0{}^H \cdot \underline{H}_0 \cdot \hat{\underline{b}} \tag{15}$$

$$\hat{\underline{b}} = \frac{1}{N \cdot L} \cdot \left( \underline{H}_0{}^H \cdot \underline{H}_0 \right)^{-1} \cdot \underline{H}_0{}^H \cdot \underline{Y}_0 \cdot \underline{1} = \frac{1}{N \cdot L} \cdot \underline{H}_0{}^+ \cdot \underline{Y}_0 \cdot \underline{1} \tag{16}$$

Der Term $(\underline{H}_0{}^H \cdot \underline{H}_0)^{-1} \cdot \underline{H}_0{}^H$ in Gleichung (16) stellt die Pseudoinverse $\underline{H}_0{}^+$ der Kanalübertragungsmatrix $\underline{H}_0$ im DC-Unterträger mit ihren Koeffizienten $H_0{}^{+(\mu,\nu)}$ dar.

Die mathematische Beziehung für den Schätzwert $\hat{\underline{b}}=[\hat{b}^{(1)} .. \hat{b}^{(\nu)} .. \hat{b}^{(U)}]$ der senderseitigen Gleichanteilsstörung $\underline{b}=[b^{(1)} .. b^{(\nu)} .. b^{(U)}]$ gemäß Gleichung (16) kann als Kombination einer räumlichen Zero-Forcing-Entzerrung der im DC-Unterträger jeweils übertragenen OFDM-Symbole und einer anschließender Mittelung des Zero-Forcing-Entzerrungsergebnisses über aufeinander folgende Zeitpunkte, in denen jeweils eine Fourier-Transformation durchgeführt wird, interpretiert werden.

Die Schätzwerte $\hat{\underline{b}}=[\hat{b}^{(1)} .. \hat{b}^{(\nu)} .. \hat{b}^{(U)}]$ der senderseitigen Gleichanteilsstörung $\underline{b}=[b^{(1)} .. b^{(\nu)} .. b^{(U)}]$ gemäß Gleichung (16) stellen absolute Pegelgrößen dar. Da absolute Pegelgrößen über weite Dimensionen schwanken können, werden sie im Hinblick auf eine sinnvolle Darstellung in einer Anzeigevorrichtung mittels Normierung mit einer Bezugsgröße zu einer relativen Pegelgröße normiert.

Als Bezugsgröße $b^{(\nu)}{}_{\mathrm{Ref}}$ zur Normierung des Schätzwerts $\hat{b}^{(\nu)}$ der im $\nu$-ten Sender verursachten Gleichanteilsstörung $b^{(\nu)}$ wird üblicherweise die Wurzel der mittleren Betragsquadrate - Root-Mean-Square (RMS) - der Datensymbole verwendet. Der RMS-Wert ist im Allgemeinen durch den entsprechenden Übertragungsstandard festgelegt oder gemäß Gleichung (17) durch die Wurzel der mittleren Betragsquadrate der OFDM-Sendesymbole $X^{(\nu)}{}_{k,l}$ im Frequenzbereich in insgesamt $N_k$ Unterträgern $k$, die mit OFDM-Sendesymbolen der Sendeantenne $\nu$ versehen sind, und in allen insgesamt $L$ für die Mittelung vorgesehenen DFT-Durchführungszeitpunkten $l$ bestimmt.

$$b^{(\nu)}{}_{\mathrm{Re}f} = \frac{1}{L \cdot N_k} \cdot \sqrt{\sum_{l=1}^{L} \sum_{k} \left| X_{k,l}{}^{(\nu)} \right|^2} \tag{17}$$

Der normierte Schätzwert $\hat{b}^{(\nu)}{}_{rel}$ für die im $\nu$-ten Sender verursachten Gleichanteilsstörung $b^{(\nu)}$ ergibt sich demnach gemäß Gleichung (18).

$$\hat{b}^{(\nu)}{}_{rel} = 20 \log_{10}\left( \frac{\left| \hat{b}^{(\nu)} \right|}{b^{(\nu)}{}_{\mathrm{Re}f}} \right) \tag{18}$$

Für ein SISO-Übertragungssystem mit einer Senderantenne und einer Empfangsantenne ergibt sich der Schätzwert $\hat{b}^{(1)}$ für eine im Sender verursachte Gleichanteilsstörung $b^{(1)}$ gemäß Gleichung (19), wobei ausgehend von Gleichung

(16) die Kanalübertragungsmatrix $\underline{H}_0$ mit den Übertragungskanalfaktoren $H_0^{(\mu,\nu)}$ im DC-Unterträger der Übertragungskanäle zwischen jeder Sendeantenne und jeder Empfangsantenne durch den Übertragungskanalfaktor $H_0^{(1,1)}$ im DC-Unterträger des Übertragungskanals zwischen der einzigen Sendeantenne und der einzigen Empfangsantenne und die Matrix $\underline{Y}_0$ mit den von den einzelnen Empfangsantennen $\mu$ in den einzelnen DFT-Durchführungszeitpunkten $l$ jeweils empfangenen OFDM-Empfangssymbolen $Y^{(\mu)}{}_{0,l}$ im Spektralbereich durch den Vektor $\underline{Y}_0^T=[Y_{0,1}^{(1)} .. Y_{0,L}^{(1)}]$ mit den von der einzigen Empfangsantenne in den einzelnen DFT-Durchführungszeitpunkten $l$ jeweils empfangenen OFDM-Empfangssymbolen $Y^{(1)}{}_{0,l}$ ersetzt wird.

$$\hat{b}^{(1)} = \frac{1}{N \cdot L} \cdot \left( H_0^{(1,1)\bullet} \cdot H^{(1,1)}{}_0 \right)^{-1} \cdot H_0^{(1,1)\bullet} \cdot \underline{Y}_0{}^T \cdot \underline{1} = \frac{\underline{Y}_0{}^T \cdot \underline{1}}{N \cdot L \cdot H^{(1,1)}{}_0} \qquad (19)$$

Als Bezugsgröße $b^{(1)}{}_{Ref}$ zur Normierung des Schätzwerts $\hat{b}^{(1)}$ der im einzigen Sender verursachten Gleichanteilsstörung $b^{(1)}$ ergibt sich in Analogie zu Gleichung (17) für ein MIMO-Übertragungssystem gemäß Gleichung (20).

$$b^{(1)}{}_{\mathrm{Re}f} = \frac{1}{L \cdot N_k} \cdot \sqrt{\sum_{l=1}^{L} \sum_{k} \left| X_{k,l}^{(1)} \right|^2} \qquad (20)$$

Im Folgenden wird das erfindungsgemäße Verfahren zur Ermittlung einer senderseitig verursachten Gleichspannungs-Störung in einem OFDM-Übertragungssystem anhand des Flussdiagramms in Fig. 4 beschrieben.

Im ersten Verfahrensschritt S10 werden die Übertragungskanalfaktoren $H_0^{(\mu,\nu)}$ im DC-Unterträger aller Übertragungskanäle zwischen jeweils einer Sendeantenne $\nu$ und jeweils einer Empfangsantenne $\mu$ ermittelt. Da in den einzelnen DC-Unterträgern keine OFDM-Sendesymbole gesendet werden, können für die DC-Unterträger auf direkten Weg keine Kanalschätzungen durchgeführt werden, so dass die Übertragungskanalfaktoren der zum jeweiligen DC-Unterträger benachbarten Unterträger mittels herkömmlicher Kanalschätzverfahren geschätzt werden und aus den für benachbarte Unterträger ermittelten Schätzwerten mittels Interpolation, bevorzugt mittels Wiener-Interpolation, die Übertragungskanalfaktoren $H_0^{(\mu,\nu)}$ im DC-Unterträger aller Übertragungskanäle bestimmt werden. Aus den einzelnen Übertragungskanalfaktoren $H_0^{(\mu,\nu)}$ im DC-Unterträger werden die Kanalübertragungsmatrix $\underline{H}_0$ im DC-Unterträger und die dazugehörige hermitsche Kanalübertragungsmatrix $\underline{H}_0^H$ und schließlich die Pseudoinverse $\underline{H}_0^+$ der Kanalübertragungsmatrix $\underline{H}_0$ im DC-Unterträger gebildet.

Im darauffolgenden Verfahrensschritt S20 werden die von den einzelnen Empfangsantennen $\mu$ jeweils erfassten OFDM-Empfangssymbole $y^{(\mu)}{}_{n,l}$ im Zeitbereich mittels diskreter Fouriertransformation in OFDM-Empfangssymbole $Y^{(\mu)}{}_{0,l}$ in den Frequenzbereich transformiert. Aus den einzelnen OFDM-Empfangssymbolen $Y^{(\mu)}{}_{0,l}$ im Frequenzbereich wird die Empfangssymbol-Matrix $\underline{Y}_0$ gebildet.

Im darauffolgenden Verfahrenschritt S30 wird für eine OFDM-Übertragung in einem Mehrantennensystem auf der Basis des Maximum-Likelihood-Schätzansatzes aus der ermittelten Pseudoinverse $\underline{H}_0^+$ der Kanalübertragungsmatrix $\underline{H}_0$ im DC-Unterträger und der Empfangssymbol-Matrix $\underline{Y}_0$ gemäß Gleichung (16) der Schätzwert $\underline{\hat{b}}=[\hat{b}^{(1)} .. \hat{b}^{(\nu)} .. \hat{b}^{(U)}]$ der senderseitigen Gleichanteilsstörung $\underline{b}=[b^{(1)} .. b^{(\nu)} .. b^{(U)}]$ ermittelt.

Für ein SISO-Übertragungssystem wird gemäß Gleichung (19) aus dem Übertragungskanalfaktor $H_0^{(1,1)}$ im DC-Unterträger des einzigen Übertragungskanals und dem zugehörigen konjugiert-komplexen Übertragungskanalfaktor $H_0^{(1,1)\ast}$ und dem mit von der einzigen Empfangsantenne empfangenen OFDM-Empfangssymbolen besetzten Vektor $\underline{Y}_0^T=[Y_{0,1}^{(1)} .. Y_{0,L}^{(1)}]$ der Schätzwerte $\hat{b}^{(1)}$ der im einzigen Sender verursachten Gleichanteilsstörung $b^{(1)}$ ermittelt.

Schließlich erfolgt im abschließenden Verfahrensschritt S40 für den Fall eines MIMO-Übertragungssystems gemäß Gleichung (17) und (18) eine Normierung der ermittelten Schätzwerte $\underline{\hat{b}}=[\hat{b}^{(1)} .. \hat{b}^{(\nu)} .. \hat{b}^{(U)}]$ der senderseitigen Gleichanteilsstörung $\underline{b}=[b^{(1)} .. b^{(\nu)} .. b^{(U)}]$ mit einer korrespondierenden Bezugsgröße $\underline{b}_{Ref}=[b^{(1)}{}_{Ref} .. b^{(\nu)}{}_{Ref} .. b^{(U)}{}_{Ref}]$ zur Bestimmung von normierten Schätzwerten $\underline{\hat{b}}_{Rel}=[\hat{b}^{(1)}{}_{Rel} .. \hat{b}^{(\nu)}{}_{Rel} .. \hat{b}^{(U)}{}_{Rel}]$ und für den Fall eines SISO-Übertragungssystems gemäß Gleichung (19) und (20) eine Normierung des ermittelten Schätzwerts $\hat{b}^{(1)}$ der senderseitigen Gleichanteilsstörung $b^{(1)}$ mit einer entsprechenden Bezugsgröße $b^{(1)}{}_{Ref}$ zur Bestimmung eines normierten Schätzwerts $\hat{b}^{(1)}{}_{Rel}$. Die normierten Schätzwerte $\underline{\hat{b}}_{Rel}=[\hat{b}^{(1)}{}_{Rel} .. \hat{b}^{(\nu)}{}_{Rel} .. \hat{b}^{(U)}{}_{Rel}]$ im Fall eines MIMO-Übertragungssystems und der normierte Schätzwert $\hat{b}^{(1)}{}_{Rel}$ im Fall eines SISO-Übertragungssystems werden abschließend auf einer Anzeigevorrichtung dargestellt.

Im Folgenden wird anhand des Blockdiagramms in Fig. 5 die erfindungsgemäße Vorrichtung zur Ermittlung einer senderseitig verursachten Gleichspannungs-Störung in einem OFDM-Übertragungssystem am Beispiel eines Mehrantennensystems bestehend aus 2 Sendeantennen und 2 Empfangsantennen gemäß Fig. 3 vorgestellt.

An das 2x2-Übertragungssystem schließt sich der Maximum-Likelihood-Schätzer 5 an, der Schätzwerte $\hat{b}$ für

die senderseitigen Gleichanteilsstörungen $\underline{b}=[b^{(1)} .. b^{(v)} .. b^{(U)}]$ aus den von den Empfangsantennen $2_1$ und $2_2$ jeweils empfangenen und von den beiden diskreten Fourier-Transformatoren $4_1$ und $4_2$ jeweils ermittelten OFDM-Empfangs-symbolen $Y^{(1)}_{k,l}$ und $Y^{(2)}_{k,l}$ im Frequenzbereich und aus der von einem Kanalschätzer 8 erhaltenen Pseudoinversen $\underline{H}_0^+$ der Kanalübertragungsmatrix $\underline{H}_0$ mit Übertragungskanalfaktoren $H_0^{(\mu,v)}$ der einzelnen DC-Unterträger ermittelt.

Der Kanalschätzer 8 führt zur Bestimmung der Pseudoinversen $\underline{H}_0^+$ der Kanalübertragungsmatrix $\underline{H}_0$ in den zu den einzelnen DC-Unterträgern jeweils benachbarten Unterträgern Kanalschätzungen durch und ermittelt aus den Übertragungskanalfaktoren der jeweils benachbarten Unterträger mittels Interpolation die Übertragungskanalfaktoren $\underline{H}_0^{(\mu,v)}$ in den einzelnen DC-Unterträgern. Die Kanalschätzung kann hierbei entweder einmal zu Beginn der Übertragung bei zeitinvarianten Übertragungskanälen oder zyklisch in einem bestimmten Zeitraster bei zeitvarianten Kanälen durchgeführt werden. Der sich an den Maximum-Likelihood-Schätzer 5 anschließende Normierer 6 ermittelt im Fall eines MIMO-Übertragungssystems normierte Schätzwerte $\hat{\underline{b}}_{Rel}=[\hat{b}^{(1)}_{Rel} .. \hat{b}^{(v)}_{Rel} .. \hat{b}^{(U)}_{Rel}]$ durch Normierung der ermittelten Schätzwerte $\hat{\underline{b}}=[\hat{b}^{(1)} .. \hat{b}^{(v)} .. \hat{b}^{(U)}]$ für die senderseitigen Gleichanteilsstörungen $\underline{b}=[b^{(1)} .. b^{(v)} .. b^{(U)}]$ mit einer Bezugsgröße $\underline{b}_{Ref}=[b^{(1)}_{Ref} .. b^{(v)}_{Ref} .. b^{(U)}_{Ref}]$ und im Fall eines SISO-Übertragungssystems einen normierten Schätzwert $\hat{b}^{(1)}_{Rel}$ durch Normierung des ermittelten Schätzwerts $\hat{b}^{(1)}$ für die senderseitige Gleichanteilsstörung $b^{(1)}$ mit einer Bezugsgröße $b^{(1)}_{Ref}$.

Die sich an den Normierer 6 anschließende Anzeigevorrichtung 8 stellt die für den Fall eines MIMO-Übertragungssystems ermittelten normierten Schätzwerte $\underline{b}_{Rel}=[b^{(1)}_{Rel} .. b^{(v)}_{Rel} .. b^{(U)}_{Rel}]$ für die senderseitigen Gleichanteilsstörungen $\underline{b}=[b^{(1)} .. b^{(v)} .. b^{(U)}]$ und den für den Fall eines SISO-Übertragungssystems ermittelten normierten Schätzwert $b^{(1)}_{Rel}$ für die senderseitige Gleichanteilsstörung $b^{(1)}$ auf einem Display dar.

Die Erfindung ist nicht auf die dargestellte Ausführungsform des erfindungsgemäßen Verfahrens und der erfindungsgemäßen Vorrichtung zur Ermittlung einer senderseitig verursachten Gleichspannungs-Störung in einem OFDM-Übertragungssystem beschränkt.

## Patentansprüche

1.  Verfahren zur Ermittlung (S30) einer senderseitig verursachten Gleichspannungs-Störung ($\underline{b}=[b^{(1)} .. b^{(v)} .. b^{(U)}]$) in einem OFDM-Übertragungssystem mit mindestens einer Sendeantenne ($1^1,..1^v,..,1^U$) und mindestens einer Empfangsantenne ($2^1, .. 2^\mu, .. , 2^v$), bei dem im Frequenzbereich unter Anwendung einer Maximum-Likelihood-Schätzung (S10) ein Schätzwert ($\hat{\underline{b}}=[\hat{b}^{(1)} .. \hat{b}^{(v)} .. \hat{b}^{(U)}]$) für die in jeder Sendeantenne ($1^1, .. 1^v, .. , 1^U$) verursachte Gleichspannungs-Störung (b=$[b^{(1)} .. b^{(v)} .. b^{(U)}]$) durch Gewichtung von in jeder Empfangsantenne ($2^1, .. 2^\mu, .. ,2^v$) jeweils empfangenen frequenztransformierten OFDM-Empfangssymbolen ($\underline{Y}=[Y^{(1)} .. Y^{(\mu)} .. Y^{(V)}]$) mit korrespondierenden Matrixelementen ($H^{+(\mu,v)}$) einer Pseudoinversen ($\underline{H}^+=(\underline{H}^H \cdot \underline{H})^{-1} \cdot \underline{H}^H$) einer Kanalübertragungsmatrix ($\underline{H}$) mit zu den Übertragungskanälen zwischen jeder Sendeantenne ($1^1, .. 1^v, .. , 1^U$) und jeder Empfangsantenne ($2^1, .. 2^\mu, .. , 2^v$) gehörigen Kanalübertragungsfaktoren ($H^{(\mu,v)}$) geschätzt wird, **dadurch gekennzeichnet,**

    **dass** die an jeder Sendeantenne ($1^1, .. 1^v, .. , 1^u$) verursachte Gleichspannungs-Störung jeweils in dem Unterträger *k* mit dem Index 0 des Übertragungskanals vorliegt, in dem jeweils kein OFDM-Sendesymbol ($\underline{x}=[x^{(1)} .. x^{(v)} .. x^{(U)}]$) gesendet wird, und die Pseudoinverse ($\underline{H}^+=(\underline{H}^H \cdot \underline{H})^{-1} \cdot \underline{H}^H$) der Kanalübertragungsmatrix $\underline{H}$ eine Pseudoinverse ($\underline{H}^+_0=(\underline{H}^H_0 \cdot \underline{H}_0)^{-1} \cdot \underline{H}^H_0$) einer Kanalübertragungsmatrix $\underline{H}_0$ des Unterträgers *(k)* mit dem Index 0 ist, die mit der inversen Transformationslänge *N* der verwendeten diskreten Fourier-Transformation und der inversen Anzahl *L* von in der Maximum-Likelihood-Schätzung verwendeten OFDM-Empfangssymbolen gewichtet wird.

2.  Verfahren zur Ermittlung einer senderseitig verursachten Gleichspannungs-Störung nach Anspruch 1, **dadurch gekennzeichnet,**
    **dass** das Übertragungssystem aus mehreren Sendeantennen und mehreren Empfangsantennen besteht.

3.  Verfahren zur Ermittlung einer senderseitig verursachten Gleichspannungs-Störung nach Anspruch 1 oder 2, **dadurch gekennzeichnet,**
    **dass** jeder Übertragungskanal aus jeweils einer der Transformationslänge (*N*) der verwendeten diskreten Fourier-Transformation entsprechenden Anzahl von Unterträgern (*k*) besteht.

4.  Verfahren zur Ermittlung einer senderseitig verursachten Gleichspannungs-Störung nach einem der Ansprüche 1 bis 3,
    **dadurch gekennzeichnet,**
    **dass** die Schätzung des Schätzwerts ($\hat{\underline{b}}=[\hat{b}^{(1)} .. \hat{b}^{(v)} .. \hat{b}^{(U)}]$) für die in jeder Sendeantenne ($1^1,..1^v,..,1^U$) verursachte Gleichspannungs-Störung ($\underline{b}=[b^{(1)} .. b^{(v)} .. b^{(U)}]$) zusätzlich eine Mittelung über jeweils *L* OFDM-Empfangssymbole beinhaltet.

5.  Verfahren zur Ermittlung einer senderseitig verursachten Gleichspannungs-Störung nach einem der Ansprüche 1 bis 4,
**dadurch gekennzeichnet,**
**dass** der Schätzwert $\underline{\hat{b}}=[\underline{\hat{b}}^{(1)} .. \underline{\hat{b}}^{(\nu)} .. \underline{\hat{b}}^{(U)}]$ für die in jeder Sendeantenne ($1^1,..1^\nu,..,1^U$) verursachte Gleichspannungs-Störung ($\underline{b}=[b^{(1)} .. b^{(\nu)} .. b^{(U)}]$) nach folgender mathematischen Beziehung ermittelt wird:

$$\underline{\hat{b}} = \frac{1}{N \cdot L} \cdot (\underline{H}_0{}^H \cdot \underline{H}_0)^{-1} \cdot \underline{H}_0{}^H \cdot \underline{Y}_0 \cdot \underline{1}$$

wobei

$\underline{H}_0$ eine Übertragungskanalmatrix mit Übertragungskanalfaktoren der Gleichspannungs-Unterträger zwischen jeder Sendeantenne ($1^1, .. 1^\nu, .. ,1^U$) und jeder Empfangsantenne ($2^1, .. 2^\mu, .. ,2^\nu$),
$\underline{Y}_0$ eine Matrix mit von jeder Empfangsantenne ($2^1, .. 2^\mu, .. ,2^\nu$) im Gleichspannungs-Unterträger jeweils empfangenen **L** aufeinander folgenden frequenztransformierten OFDM-Empfangssymbolen,
$\underline{1}$ ein Vektor, dessen Komponenten den Wert 1 beinhalten,
$N$ die Transformationslänge der verwendeten diskreten Fourier-Transformation und
$L$ die Anzahl der jeweils im Zeitbereich gemittelten, aufeinander folgend empfangenen OFDM-Empfangssymbole ist.

6. Verfahren zur Ermittlung einer senderseitig verursachten Gleichspannungs-Störung nach Anspruch 1 bis 5,
**dadurch gekennzeichnet,**
**dass** die Übertragungskanalfaktoren ($H_0{}^{(\mu,\nu)}$) der Übertragungskanalmatrix ($\underline{H}_0$) im Gleichspannungs-Unterträger zwischen jeder Sendeantenne ($1^1, .. 1^\nu, .., 1^U$) und jeder Empfangsantenne ($2^1, .. 2^\mu, .., 2^\nu$) durch Interpolation der für die jeweils benachbarten Unterträger geschätzten Übertragungskanalfaktoren ermittelt werden.

7. Verfahren zur Ermittlung einer senderseitig verursachten Gleichspannungs-Störung nach einem der Ansprüche 1 bis 6,
**dadurch gekennzeichnet,**
**dass** ein normierter Schätzwert $\underline{\hat{b}}_{rel} =[\hat{b}^{(1)}{}_{rel} .. \hat{b}^{(\nu)}{}_{rel} .. \hat{b}^{(U)}{}_{rel}]$ für die in jeder Sendeantenne ($1^1, .. 1^\nu, .., 1^U$) verursachte Gleichspannungs-Störung $\underline{b}=[b^{(1)} .. b^{(\nu)} .. b^{(U)}]$ durch Normierung des Schätzwerts $\underline{\hat{b}}=[\hat{b}^{(1)} .. \hat{b}^{(\nu)} .. \hat{b}^{(U)}]$ für die in jeder Sendeantenne ($1^1, .. 1^\nu, .., 1^U$) verursachte Gleichspannungs-Störung $\underline{b}=[b^{(1)} .. b^{(\nu)} .. b^{(U)}]$ mit der Wurzel der mittleren Betragsquadrate von jeweils insgesamt $L$ aufeinander folgenden, von der jeweiligen Sendeantenne ($1^1, .. 1^\nu, .., 1^U$) in allen $N$-1 Unterträgern jeweils gesendeten frequenztransformierten OFDM-Sendesymbole $\underline{X}=[X^{(1)} .. X^{(\nu)} .. X^{(U)}]$ ermittelt wird.

8. Verfahren zur Ermittlung einer senderseitig verursachten Gleichspannungs-Störung nach Anspruch 7, **dadurch gekennzeichnet,**
**dass** der normierte Schätzwert $\hat{b}^{(\nu)}{}_{rel}$ für die in der $\nu$-ten Sendeantenne ($1^\nu$) verursachte Gleichspannungs-Störung $b^{(\nu)}$ nach folgender mathematischer Formel berechnet wird:

$$\hat{b}^{(\nu)}{}_{rel} = 20 \log_{10}\left(\frac{\left|\hat{b}^{(\nu)}\right|}{\frac{1}{L \cdot N_k} \cdot \sqrt{\sum_{l=1}^{L} \sum_{k} \left|X_{k,l}{}^{(\nu)}\right|^2}}\right)$$

wobei

$\hat{b}^{(\nu)}$ ein unnormierter Schätzwert für die in der $\nu$-ten Sendeantenne ($1^\nu$) verursachte Gleichspannungs-Störung,
$X_{k,l}{}^{(\nu)}$ ein von der $\nu$-ten Sendeantenne ($1^\nu$) im $k$-ten Unterträger und in der $l$-ten Zeitposition gesendetes frequenztransformiertes OFDM-Sendesymbol und
$N_k$ die mit OFDM-Sendesymbolen der Sendeantenne $\nu$ besetzten Unterträger $k$ sind.

9. Vorrichtung zur Ermittlung einer senderseitig verursachten Gleichspannungs-Störung ($\underline{b}=[b^{(1)} .. b^{(\nu)} .. b^{(U)}]$) in einem OFDM-Übertragungssystem mit einem Verfahren nach einem der Ansprüche 1 bis 8, mit mindestens einer Sende-

antenne ($1^1$, .. $1^\nu$, .. ,$1^U$) und mindestens einer Empfangsantenne ($2^1$, .. $2^\mu$, .. ,$2^\nu$) enthaltend zumindest einen Maximum-Likelihood-Schätzer (5) zur Schätzung eines Schätzwerts ($\underline{\hat{b}}=[\hat{b}^{(1)} .. b^{(\nu)} .. b^{(U)}]$) für die in jeder Sendeantenne ($1^1$, .. $1^\nu$, .. ,$1^U$) verursachte Gleichspannungs-Störung ($\underline{b}=[b^{(1)} .. b^{(\nu)} .. b^{(U)}]$) mittels Gewichtung von in jeder Empfangsantenne ($2^1$, .. $2^\mu$, .., $2^\nu$) jeweils empfangenen frequenztransformierten OFDM-Empfangssymbolen ($\underline{Y}=[Y^{(1)} .. Y^{(\mu)} .. Y^{(V)}]$) mit korrespondierenden Matrixelementen ($H^{+(\mu,\nu)}$) einer Pseudoinversen ($\underline{H}^{+}=(\underline{H}^H \cdot \underline{H})^{-1} \cdot \underline{H}^H$) einer bekannten Kanalübertragungsmatrix ($\underline{H}$) mit zu den Übertragungskanälen zwischen jeder Sendeantenne ($1^1$, .. $1^\nu$, .., $1^U$) und jeder Empfangsantenne ($2^1$, .. $2^\mu$, .. ,$2^\nu$) gehörigen Kanalübertragungsfaktoren ($H^{(\mu,\nu)}$).

**10.** Vorrichtung zur Ermittlung einer senderseitig verursachten Gleichspannungs-Störung nach Anspruch 9, **dadurch gekennzeichnet,**
**dass** sich an den Maximum-Likelihood-Schätzer (5) ein Normierer (6) zur Ermittlung von normierten Schätzwerten $\underline{\hat{b}}_{Rel} = [\hat{b}_{Rel}^{(1)} .. \hat{b}_{Rel}^{(\nu)} .. \hat{b}_{Rel}^{(U)}]$ und eine Anzeigevorrichtung (7) zur Darstellung der normierten Schätzwerte $\underline{\hat{b}}_{Rel}$ $= [\hat{b}_{Rel}^{(1)} \hat{b}_{Rel}^{(\nu)} .. \hat{b}_{Rel}^{(U)}]$ anschließt.

**11.** Vorrichtung zur Ermittlung einer senderseitig verursachten Gleichspannungs-Störung nach Anspruch 9 oder 10, **dadurch gekennzeichnet,**
**dass** der Maximum-Likelihood-Schätzer (5) mit einem Kanalschätzer (8) zur Ermittlung von Kanalübertragungsfaktoren ($H^{(\mu,\nu)}$) der Übertragungskanalmatrix (H), insbesondere von Kanalübertragungsfaktoren ($H_0^{(\mu,\nu)}$) einer Übertragungskanalmatrix ($\underline{H}_0$) mit Gleichspannungs-Unterträgern, verbunden ist.

## Claims

**1.** Method for determining (S30) a DC offset ($\underline{b}=[b^{(1)} .. b^{(\nu)} .. b^{(U)}]$) caused on the transmitter side in an OFDM (multiplexing) transmission system with at least one transmitting antenna ($1^1$, .. $1^\nu$, .., $1^U$) and at least one receiving antenna ($2^1$, .. $2^\mu$, .., $2^\nu$), in which in the frequency domain using a maximum likelihood estimation (S10) an estimated value ($\underline{\hat{b}}=[\hat{b}^{(1)} .. \hat{b}^{(\nu)} .. \hat{b}^{(U)}]$) is determined for the DC offset ($\underline{b}=[b^{(1)} .. b^{(\nu)} .. b^{(U)}]$) caused in each transmitting antenna ($1^1$, .. $1^\nu$, .., $1^U$) by weighting of frequency-transformed OFDM receive symbols ($\underline{Y}=[Y^{(1)} .. Y^{(\mu)} .. Y^{(V)}]$) received in each receiving antenna ($2^1$, .. $2^\mu$, .., $2^\nu$) with corresponding matrix elements ($H^{+(\mu,\nu)}$) of a pseudo inverse ($\underline{H}^{+}=(\underline{H}^H \cdot \underline{H})^{-1} \cdot \underline{H}^H$) of a channel transmission matrix ($\underline{H}$) with channel transmission factors ($H^{(\mu,\nu)}$) for the transmission channels between each transmitting antenna ($1^1$, .. $1^\nu$, .., $1^U$) and each receiving antenna ($2^1$, .. $2^\mu$, .., $2^\nu$)
**characterised in that**
the DC offset caused in each transmitting antenna ($1^1$, .. $1^\nu$, .. ,$1^u$) is present in each case in the sub-carrier k with the index 0 of the transmission channel in which in each case no OFDM transmit symbol ($\underline{x}=[x^{(1)} .. x^{(\nu)} .. x^{(U)}]$) is transmitted, and the pseudo inverse ($\underline{H}^{+}=(\underline{H}^H \cdot \underline{H})^{-1} \cdot \underline{H}^H$) of the channel transmission matrix $\underline{H}$ is a pseudo inverse ($\underline{H}^{+}_0=(\underline{H}^H_0 \cdot \underline{H}_0)^{-1} \cdot \underline{H}^H_0$) of a channel transmission matrix $\underline{H}_0$ of the sub-carrier ($k$) with the index 0 which is weighted with the inverse transformation length $N$ of the discrete Fourier transformation used and the inverse number $L$ of OFDM receive symbols used in the maximum likelihood estimation.

**2.** Method for determining a DC offset caused on the transmitter side according to claim 1,
**characterised in that**
the transmission system consists of a plurality of transmitting antennas and a plurality of receiving antennas.

**3.** Method for determining a DC offset caused on the transmitter side according to claim 1 or 2,
**characterised in that**
each transmission channel consists of in each case a number of sub-carriers ($k$) corresponding to the transformation length ($N$) of the discrete Fourier transformation used.

**4.** Method for determining a DC offset caused on the transmitter side according to one of claims 1 to 3, **characterised in that**
the determination of the estimated value ($\underline{\hat{b}}=[\hat{b}^{(1)} .. \hat{b}^{(\nu)} .. \hat{b}^{(U)}]$) for the DC offset ($\underline{b}=[b^{(1)} .. b^{(\nu)} .. b^{(U)}]$) caused in each transmitting antenna ($1^1$, .. $1^\nu$, .., $1^U$) additionally includes a mean over in each case $L$ OFDM receive symbols.

**5.** Method for determining a DC offset caused on the transmitter side according to one of claims 1 to 4, **characterised in that**
the estimated value $\underline{\hat{b}}=[\hat{b}^{(1)} .. \hat{b}^{(\nu)} .. \hat{b}^{(U)}]$ for the DC offset ($\underline{b}=[b^{(1)} .. b^{(\nu)} .. b^{(U)}]$) caused in each transmitting antenna ($1^1$, .. $1^\nu$, .., $1^U$) is determined according to the following mathematical relation:

$$\hat{\underline{b}} = \frac{1}{N \cdot L} \cdot (\underline{H}_0^{\ H} \cdot \underline{H}_0)^{-1} \cdot \underline{H}_0^{\ H} \cdot \underline{Y}_0 \cdot \underline{1}$$

in which

$\underline{H}_0$ is a transmission channel matrix with transmission channel factors of the DC sub-carriers between each transmitting antenna ($1^1$, .. $1^\nu$, .., $1^U$) and each receiving antenna ($2^1$, .. $2^\mu$, .. , $2^\nu$),

$\underline{Y}_0$ is a matrix with **L** successive frequency-transformed OFDM receive symbols in each case received by each receiving antenna ($2^1$, .. $2^\mu$, .., $2^\nu$) in the DC sub-carrier,

$\underline{1}$ is a vector the components of which include the value 1,

$N$ is the transformation length of the discrete Fourier transformation used and

$L$ is the number of successive OFDM receive symbols received averaged in the time domain.

6. Method for determining a DC offset caused on the transmitter side according to one of claims 1 to 5, **characterised in that**
the transmission channel factors ($H_0^{(\mu,\nu)}$) of the transmission channel matrix ($\underline{H}_0$) in the DC sub-carrier between each transmitting antenna ($1^1$, .. $1^\nu$, .., $1^U$) and each receiving antenna ($2^1$, .. $2^\mu$, .., $2^\nu$) are determined by interpolation of the estimated transmission channel factors for the adjacent sub-carriers.

7. Method for determining a DC offset caused on the transmitter side according to one of claims 1 to 6, **characterised in that**
a normalised estimated value $\hat{\underline{b}}_{rel}=[\hat{b}^{(1)}{}_{rel} .. \hat{b}^{(\nu)}{}_{rel} .. \hat{b}^{(U)}{}_{rel}]$ for the DC offset $\underline{b}=[b^{(1)} .. b^{(\nu)} .. b^{(U)}]$ caused in each transmitting antenna ($1^1$, .. $1^\nu$, .., $1^U$) is determined by normalising the estimated value $\hat{\underline{b}}=[\hat{b}^{(1)} .. \hat{b}^{(\nu)} .. \hat{b}^{(U)}]$ for the DC offset $\underline{b}=[b^{(1)} .. b^{(\nu)} .. b^{(U)}]$ caused in each transmitting antenna ($1^1$, .. $1^\nu$, .. ,$1^U$) with the root of the mean squares of in each case a total of $L$ successive frequency-transformed OFDM transmit symbols $\underline{X}=[X^{(1)} .. X^{(\nu)} .. X^{(U)}]$ transmitted by the respective transmitting antenna ($1^1$, .. $1^\nu$, .., $1^U$) in all the $N$-1 sub-carriers.

8. Method for determining a DC offset caused on the transmitter side according to claim 7,
**characterised in that**
the normalised estimated value $\hat{b}^{(\nu)}{}_{rel}$ for the DC offset $b^{(\nu)}$ caused in the $\nu$-th transmitting antenna ($1^\nu$) is calculated using the following mathematical formula:

$$\hat{b}^{(\nu)}{}_{rel} = 20 \log_{10}\left( \frac{\left| \hat{b}^{(\nu)} \right|}{\frac{1}{L \cdot N_k} \cdot \sqrt{\sum_{l=1}^{L} \sum_{k} \left| X_{k,l}^{(\nu)} \right|^2}} \right)$$

in which

$\hat{b}^{(\nu)}$ is an unnormalised estimated value for the DC offset caused in the $\nu$-th transmitting antenna ($1^\nu$),

$X_{k,l}^{(\nu)}$ is a frequency-transformed OFDM transmit symbol transmitted by the $\nu$-th transmitting antenna ($1^\nu$) in the $k$-th sub-carrier and in the $l$-th time position and

$N_k$ is the sub-carrier $k$ populated with OFDM transmit symbols of the transmitting antenna $\nu$.

9. Device for determining a DC offset
($\underline{b}=[b^{(1)} .. b^{(\nu)} .. b^{(U)}]$) caused on the transmitter side in an OFDM (multiplexing) transmission system with a method according to one of claims 1 to 8, with at least one transmitting antenna ($1^1$, .. $1^\nu$.., $1^U$) and at least one receiving antenna ($2^1$, .. $2^\mu$, .., $2^\nu$) comprising at least one maximum likelihood estimator (5) for determining an estimated value ($\hat{\underline{b}}=[\hat{b}^{(1)} .. \hat{b}^{(\nu)} .. \hat{b}^{(U)}]$) for the DC offset ($\underline{b}=[b^{(1)} .. b^{(\nu)} .. b^{(U)}]$) caused in each transmitting antenna ($1^1$, .. $1^\nu$, .., $1^U$) by means of weighting of frequency-transformed OFDM receive symbols ($\underline{Y}=[Y^{(1)} .. Y^{(\mu)} .. Y^{(V)}]$) in each case received in each receiving antenna ($2^1$, .. $2^\mu$, .. , $2^\nu$) with corresponding matrix elements ($H^{+(\mu,\nu)}$) of a pseudo inverse ($\underline{H}^+=(\underline{H}^H \cdot \underline{H})^{-1} \cdot \underline{H}^H$) of a known channel transmission matrix ($\underline{H}$) with channel transmission factors ($H^{(\mu,\nu)}$) for the transmission channels between each transmitting antenna ($1^1$, .. $1^\nu$, .., $1^U$) and each receiving antenna ($2^1$, .. $2^\mu$, .., $2^\nu$).

**10.** Device for determining a DC offset caused on the transmitter side according to claim 9,
**characterised in that**
connected to the maximum likelihood estimator (5) there is a normalising element (6) for determining normalised estimated values $\hat{\underline{b}}_{Rel}=[\hat{b}_{Rel}{}^{(1)} .. \hat{b}_{Rel}{}^{(v)} .. \hat{b}_{Rel}{}^{(U)}]$ and an indicating device (7) for displaying the normalised estimated values $\hat{\underline{b}}_{Rel}=[\hat{b}_{Rel}{}^{(1)} .. \hat{b}_{Rel}{}^{(v)} .. \hat{b}_{Rel}{}^{(U)}]$.

**11.** Device for determining a DC offset caused on the transmitter side according to claim 9 or 10,
**characterised in that**
the maximum likelihood estimator (5) is connected with a channel estimator (8) for determining channel transmission factors ($H^{(\mu,v)}$) of the transmission channel matrix ($\underline{H}$), in particular channel transmission factors ($H_0{}^{(\mu,v)}$) of a transmission channel matrix ($\underline{H}_0$) with DC sub-carriers.

**Revendications**

**1.** Procédé de détermination (S30) d'un décalage en courant continu provoqué côté émetteur ($\underline{b} = [b^{(1)} .. b^{(v)} .. b^{(U)}]$) dans un système de transmission OFDM comportant au moins une antenne émettrice ($1^1$, .., $1^v$, .., $1^U$) et comportant au moins une antenne réceptrice ($2^1$, .., $2^\mu$, .., $2^U$), dans lequel, dans un domaine de fréquence par application d'une estimation du maximum de vraisemblance (S10), une valeur d'estimation ($\hat{\underline{b}}=[\hat{b}^{(1)}..\hat{b}^{(v)}..\hat{b}^{(U)}]$) est estimée pour le décalage en courant continu (b = $[b^{(1)} .. b^{(v)} .. b^{(U)}]$) provoqué dans chaque antenne émettrice ($1^1$, .. $1^v$, .., $1^U$) par pondération des symboles de réception OFDM ($\underline{Y} = [ Y^{(1)} .. Y^{(\mu)} .. Y^{(v)}]$) transformés en fréquence reçus respectivement dans chaque antenne réceptrice ($2^1$, .. $2^\mu$, .. $2^U$) avec des éléments de matrice correspondants ($H^{+(\mu,v)}$) d'une pseudo-inverse ($\underline{H}^+ = (\underline{H}^H \cdot \underline{H})^{-1} \cdot \underline{H}^H$) d'une matrice de transmission de canal ($\underline{H}$) avec les facteurs de transmission de canal ($H^{(\mu,v)}$) associés aux canaux de transmission entre chaque antenne émettrice ($1^1$, .. $1^v$, .. $1^U$) et chaque antenne réceptrice ($2^1$, .. $2^\mu$, .. $2^U$), **caractérisé en ce que** le décalage en courant continu provoqué dans chaque antenne émettrice ($1^1$, .. $1^v$, .. $1^U$) existe respectivement dans la sous-porteuse $k$ avec l'indice 0 du canal de transmission, dans lequel aucun symbole d'émission OFDM ($\underline{x}$ = $[x^{(1)} .. x^{(\mu)} .. x^{(v)}]$) respectif n'est envoyé, et la pseudo-inverse ($\underline{H}^+ = (\underline{H}^H \cdot \underline{H})^{-1} \cdot \underline{H}^H$) de la matrice de transmission de canal $\underline{H}$ est une pseudo-inverse ($\underline{H}^+_0 = (\underline{H}^H_0 \cdot \underline{H}_0)^{-1} \cdot \underline{H}^H_0$) d'une matrice de transmission de canal $\underline{H}_0$ de la sous-porteuse (k) avec l'indice 0, qui est pondérée avec la longueur de transformation inverse N de la transformation de Fourier discrète utilisée et le nombre inverse L des symboles de réception OFDM utilisés dans l'estimation du maximum de vraisemblance.

**2.** Procédé de détermination d'un décalage en courant continu provoqué côté émetteur selon la revendication 1,
**caractérisé en ce que**
le système de transmission est composé de plusieurs antennes émettrices et de plusieurs antennes réceptrices.

**3.** Procédé de détermination d'un décalage en courant continu provoqué côté émetteur selon la revendication 1 ou 2,
**caractérisé en ce que**
chaque canal de transmission est constitué respectivement de l'une des longueurs de transformation (N) du nombre de sous-porteuses (k) correspondant à la transformation de Fourier discrète utilisée.

**4.** Procédé de détermination d'un décalage en courant continu provoqué côté émetteur selon l'une des revendications 1 à 3, **caractérisé en ce que**
l'estimation de la valeur d'estimation ($\hat{\underline{b}}=[\hat{b}^{(1)}..\hat{b}^{(v)}..\hat{b}^{(U)}]$) pour le décalage en courant continu ($\underline{b} = [b^{(1)} .. b^{(v)} .. b^{(U)}]$) provoqué dans chaque antenne émettrice ($1^1$, .. $1^v$, ..$1^U$) contient de plus une moyenne sur les symboles de réception OFDM $L$ respectifs.

**5.** Procédé de détermination d'un décalage en courant continu provoqué côté émetteur selon l'une des revendications 1 à 4, **caractérisé en ce que**
la valeur d'estimation ($\hat{\underline{b}}=[\hat{b}^{(1)}..\hat{b}^{(v)}..\hat{b}^{(U)}]$) pour le décalage en courant continu ($\underline{b} = [b^{(1)} .. b^{(v)} .. b^{(U)}]$) provoqué dans chaque antenne émettrice ($1^1$, .. $1^v$, .. $1^U$) est déterminée selon la relation mathématique suivant :

$$\hat{\underline{b}} = \frac{1}{N \cdot L} \cdot \left( \underline{H}_0{}^H \cdot \underline{H}_0 \right)^{-1} \cdot \underline{H}_0{}^H \cdot \underline{Y}_0 \cdot \underline{1}$$

dans laquelle

$\underline{H}_0$ est une matrice de canal de transmission comportant des facteurs de canal de transmission des sous-porteuses à courant continu entre chaque antenne émettrice ($1^1$, .. $1^\nu$, .. $1^U$) et chaque antenne réceptrice ($2^1$, .. $2^\mu$, .. $2^U$),

$\underline{Y}_0$ est une matrice comportant les symboles de réception OFDM transformés en fréquence consécutifs $L$ reçus respectivement par chaque antenne réceptrice ($2^1$, .. $2^\mu$, .. $2^U$) dans la sous-porteuse à courant continu,

$\underline{1}$ est un vecteur, dont les composantes contiennent la valeur 1,

N est la longueur de transformation de la transformation de Fourier discrète utilisée et

L est le nombre de symboles de réception OFDM reçus consécutifs respectifs moyennés dans le domaine temporel.

6. Procédé de détermination d'un décalage en courant continu provoqué côté émetteur selon la revendication 1 à 5, **caractérisé en ce que**

les facteurs de canal de transmission ($H_0^{(\mu,\nu)}$) de la matrice de canal de transmission ($\underline{H}_0$) dans la sous-porteuse à courant continu entre chaque antenne émettrice ($1^1$, .. $1^\nu$, .. $1^U$) et chaque antenne réceptrice ($2^1$, .. $2^\mu$, .. $2^U$) sont déterminés par interpolation des facteurs de canal de transmission estimés pour la sous-porteuse adjacente respective.

7. Procédé de détermination d'un décalage en courant continu provoqué côté émetteur selon l'une des revendications 1 à 6, **caractérisé en ce que**

une valeur d'estimation normée $\underline{\hat{b}}_{Rel} = [\hat{b}_{Rel}^{(1)}..\hat{b}_{Rel}^{(\nu)}..\hat{b}_{Rel}^{(U)}]$ pour le décalage en courant continu ($\underline{b} = [b^{(1)} .. b^{(\nu)} .. b^{(U)}]$) provoqué dans chaque antenne émettrice ($1^1$, .. $1^\nu$, .. $1^U$) est déterminée par normalisation de la valeur d'estimation ($\underline{\hat{b}}=[\hat{b}^{(1)}..\hat{b}^{(\nu)}..\hat{b}^{(U)}]$) pour le décalage en courant continu ($\underline{b} = [b^{(1)} .. b^{(\nu)} .. b^{(U)}]$) provoqué dans chaque antenne émettrice ($1^1$, .. $1^\nu$, .. $1^U$) avec la racine des modules au carré moyennés de l'ensemble respectif des symboles d'émission OFDM $\underline{X} = [X^{(1)} .. X^{(\nu)} .. X^{(U)}]$ transformés en fréquence consécutifs L émis chacun par l'antenne émettrice respective ($1^1$, .. $1^\nu$, .. $1^U$) dans toutes les sous-porteuses $N$-1.

8. Procédé de détermination de décalage en courant continu provoqué côté émetteur selon la revendication 7, **caractérisé en ce que**

la valeur d'estimation normée $\hat{b}^{(\nu)}_{rel}$ pour le décalage en courant continu $b^{(\nu)}$ provoqué dans la $\nu$-ème antenne émettrice ($1^\nu$) est calculée selon la formule mathématique suivants :

$$\hat{b}^{(\nu)}_{rel} = 20\log_{10}\left(\frac{\left|\hat{b}^{(\nu)}\right|}{\frac{1}{L\cdot N_k}\cdot\sqrt{\sum_{l=1}^{L}\sum_{k}\left|X_{k,l}^{(\nu)}\right|^2}}\right)$$

dans laquelle

$\hat{b}^{(\nu)}$ est une valeur d'estimation non normée pour le décalage en courant continu provoqué dans la $\nu$-ème antenne émettrice ($1^\nu$),

$X_{k,l}^{(\nu)}$ est un symbole d'émission OFDM transformé en fréquence émis par la $\nu$-ème antenne émettrice ($1^\nu$) dans la $k$-ème sous-porteuse et dans la $l$-ème position temporelle et $N_k$ sont les sous-porteuses $k$ occupées par les symboles d'émission OFDM de l'antenne émettrice $\nu$.

9. Dispositif de détermination d'un décalage en courant continu provoqué côté émetteur ($\underline{b} = [b^{(1)} .. b^{(\nu)} .. b^{(U)}]$) dans un système de transmission OFDM comportant un procédé selon l'une des revendications 1 à 8, comportant au moins une antenne émettrice ($1^1$, .. $1^\nu$, .. $1^U$) et au moins une antenne réceptrice ($2^1$, .. $2^\mu$, .. $2^U$) contenant au moins un estimateur de maximum de vraisemblance (5) pour estimer une valeur d'estimation ($\underline{\hat{b}}=[\hat{b}^{(1)}..\hat{b}^{(\nu)}..\hat{b}^{(U)}]$) pour le décalage en courant continu ($\underline{b} = [b^{(1)} .. b^{(\nu)} .. b^{(U)}]$) provoqué dans chaque antenne émettrice ($1^1$, .. $1^\nu$, .. $1^U$) au moyen d'une pondération des symboles de réception OFDM ($\underline{Y} = [Y^{(1)} .. Y^{(\mu)} .. Y^{(\nu)}]$) transformés en fréquence respectivement reçus dans chaque antenne réceptrice ($2^1$, .., $2^\mu$, .., $2^U$) avec les éléments de matrice correspondants $(H^{+(\mu,\nu)})$ d'une pseudo-inverse ($H^+ = (\underline{H}^H \cdot \underline{H})^{-1} \cdot \underline{H}^H$) d'une matrice de transmission de canal connue ($\underline{H}$) avec des facteurs de transmission de canal $(H^{(\mu,\nu)})$ associés aux canaux de transmission entre chaque antenne émettrice ($1^1$, .., $1^\nu$, .., $1^U$) et chaque antenne réceptrice ($2^1$, ..$2^\mu$, .., $2^U$).

**10.** Dispositif de détermination d'un décalage en courant continu provoqué côté émetteur selon la revendication 9, **caractérisé en ce que**
un normalisateur (6) est relié à l'estimateur de maximum de vraisemblance (5) en vue de la détermination de valeurs d'estimation normées $\underline{\hat{b}}_{\mathrm{Re}l} = [\hat{b}_{\mathrm{Re}l}^{(1)}..\hat{b}_{\mathrm{Re}l}^{(\nu)}..\hat{b}_{\mathrm{Re}l}^{(U)}]$ et à un dispositif d'affichage (7) pour afficher les valeurs d'estimation normées $\underline{\hat{b}}_{\mathrm{Re}l} = [\hat{b}_{\mathrm{Re}l}^{(1)}..\hat{b}_{\mathrm{Re}l}^{(\nu)}..\hat{b}_{\mathrm{Re}l}^{(U)}]$.

**11.** Dispositif de détermination d'un décalage en courant continu provoqué côté émetteur selon la revendication 9 ou 10, **caractérisé en ce que**
l'estimateur de maximum de vraisemblance (5) est relié à un estimateur de canal (8) en vue de la détermination de facteurs de transmission de canal ($H^{(\mu,\nu)}$) de la matrice de canal de transmission (H), en particulier de facteurs de transmission de canal ($H_0^{(\mu,\nu)}$) d'une matrice de canal de transmission ($\underline{H}_0$) avec des sous-porteuses à courant continu.

Fig. 1

Fig. 2

**Fig. 3**

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10303475 B3

**In der Beschreibung aufgeführte Nicht-Patentliteratur**

- Design of Dual-Band MIMO-OFDM System for Next Generation Wireless LAN. **HEEJUNG YU et al.** IEEE International Conference on Communications. IEEE, 20. Mai 2005, vol. 3, 2640-2644